# EUROPEAN PATENT APPLICATION

(11) **EP 3 932 514 A1**
(43) Date of publication of application: **05.01.2022**
(21) Application number: 21174343.0
(22) Date of filing: 18.05.2021
(51) Int. Cl.: B01D 27/10, B01D 27/08

(54) **FILTER ASSEMBLY**

(30) Priority: 03.07.2020 EP 20183994
(71) Applicant: Illinois Tool Works, Inc., Glenview, Illinois 60025 (US)
(72) Inventor: CHANTOME, Isabelle, Illinois, 60025 (US); COUTY, Franck, Illinois, 60025 (US); MARTINEAU, Sylvain, Illinois, 60025 (US)
(74) Representative: HGF

(57) **Abstract**

The invention relates to a filter assembly (1) for use in a vehicle, the filter assembly (1) comprising a filter (2) having a first end with a valve seat, a housing cover (3) and a valve assembly (4) including a valve member and biasing means, wherein the filter (2) is configured to be received, in use, within a filter housing with the housing cover (3) secured to the filter housing and over the first end of the filter such that an inner surface of the housing cover engages the biasing means and urges the valve member into sealing engagement with the valve seat of the first end of the filter (2).

## Description

This invention relates generally to a filter assembly for use in vehicles. More specifically, although not exclusively, this invention relates to filter assemblies for incorporation in a transmission lubrication circuit of a vehicle, a lubrication circuit comprising such a filter assembly and a vehicle comprising such a filter assembly or lubrication circuit.

### Background

The components of vehicle transmission units operate at high rotational speeds and under heavy loads. As a result, friction effects cause components to operate at high temperatures. To provide cooling and prolong the operational life of components, transmission units include a lubrication circuit. Such lubrication circuits are often of the 'force-feed lubrication' type, including an oil pump that continuously draws lubricant from a reservoir and through a filter, prior to being applied to rotating components. The lubricant then returns to the fluid reservoir and the cycle continues.

The lubricant collects foreign matter and notably particles from the components of the transmission, as it circulates through the circuit. The filter is arranged so as to remove particles above a certain size, prior to being applied to rotating components. These filters typically have an average pore size of between 25 and 70 microns.

Such filters fail to retain very small impurities, which may cause issues to components of a transmission unit. In order to remove such impurities, a fine filtration media is required. Such fine filtration media can cause a substantial pressure drop. As a result, the flow area across the filtration media required to maintain the necessary flow rate of lubricant would be prohibitively large.

It is known to provide this fine filtration media in a bypass line, which enables effective filtration over time. Filter assemblies for such applications normally include a pleated sheet filter element formed into a hollow cylinder. The lubricant flows through the filter element in a radial direction, either from its hollow interior outwardly, or from the outside into its hollow interior. The passage of the lubricant through the filter assembly can damage the filter element, as a result of the increased viscosity of common lubricants at low temperatures. To prevent this damage, a valve is provided to bypass the filter element while the lubricant is cold and viscous.

Typically, the filter element is provided with end caps secured thereto, with a valve incorporated within one of the end caps. This, filter element assembly is then inserted into a housing and sealed with a cover. The cover engages the end cap of the filter assembly that includes the valve, and describes with the facing end cap a bypass flow path through which bypass lubricant is able to flow.

It is a non-exclusive object of the invention to provide a simpler and/or improved filter assembly that mitigates at least some of the drawbacks of known filter assemblies.

### Summary of the Invention

Accordingly, a first aspect of the invention provides a filter assembly for use in a vehicle, the filter assembly comprising a filter having a first end with a valve seat, a housing cover and a valve assembly including a valve member and biasing means, wherein the filter is configured to be received, in use, within a filter housing with the housing cover secured to the filter housing and over the first end of the filter such that an inner surface of the housing cover engages the biasing means and urges the valve member into sealing engagement with the valve seat of the first end of the filter.

The provision of an assembly in which the biasing means and valve member are between and engage the housing cover and the first end of the filter can simplify the assembly and/or reduce flow restrictions. The biasing means may comprise a biaser or biasing member, and references hereinafter to biasing member may be replaced with biasing means or biaser.

The housing cover may comprise a locating means, e.g. for locating and/or engaging the biasing means. The locating means may locate and/or engage the biasing means. The locating means may comprise a locator or locating member, and references hereinafter to locator may be replaced with locating means or locating member. The locator may comprise a projection, e.g. on or projecting from the inner surface of the housing cover. The projection may be circular and/or may comprise a step. The step may be configured to locate, engage and/or centre the biasing member.

The valve seat may describe a bypass inlet. The valve member may be biased to close the bypass inlet, for example until the pressure exerted, in use, on the valve member reaches a predetermined threshold to open the inlet or valve assembly. The valve member may comprise a flat or curved surface for engaging the valve seat. The valve member may comprise an engaging portion or plate, which may have a flat or curved or spherical engaging surface, and a projection extending from the engaging portion, e.g. for engaging the biasing member. The valve member may comprise a spherical member.

The housing cover may be secured or connected to, e.g. directly to, the filter. The housing cover may be secured or connected to the filter by a connector. The connector may at least partially surround or circumscribe the locator and/or the biasing member. The connector may include one or more apertures, which may describe a bypass flow passage. The biasing member and valve member may captivated between the housing cover and the filter, e.g. when they are secured or connected together. The connector may comprise a snap connector. The connector may comprise an annular connecting means or connector, hereinafter annular connector. The annular connector may include one or more elements or connectors in, on, projecting from and/or integral with at least one of the filter and the housing cover. The or each annular connector may comprise a ring.

The housing cover may be connected to the filter by a connector with the biasing means and valve member captivated therebetween, the housing cover comprising a locator which locates and engages the biasing means.

The connector may comprise respective annular connectors of the filter and the housing cover. A first of the annular connectors may comprise an external projection or flange, e.g. an external, radial projection or flange. A second of the annular connectors may comprise an internal projection or flange, e.g. an internal, radial projection or flange. The annular connectors may cooperate with one another, e.g. to secure or connect the housing cover to the filter. The first annular connector may be received or receivable within the second annular connector.

The connector may at least partially surround the locator and include one or more apertures describing a bypass flow passage.

The connector may comprise a first annular connector, which includes an external radial flange and may be received within a second annular connector that includes an internal radial flange. The biasing means may urge the housing cover away from the filter such that the flanges engage one another.

The annular connectors may comprise an interrupted annular wall including a plurality of spaced annular wall segments and the apertures describing the bypass flow passage may be described between the spaced annular wall segments.

At least one of the first and second annular connectors may be interrupted and/or may comprise one or more apertures, spaces or gaps. At least one of the first and second annular connectors may comprise an interrupted annular wall, which may comprise a plurality of, e.g. two or more, spaced annular wall segments. The apertures, spaces or gaps may be described between and/or by the spaced annular wall segments. In some examples, the first annular connector is continuous or substantially continuous and the second annular connector is interrupted and/or comprises an interrupted annular wall, for example two or more spaced annular wall segments. In other examples, the second annular connector is continuous or substantially continuous and the first annular connector is interrupted and/or comprises an interrupted annular wall, for example two or more spaced annular wall segments.

The interrupted annular wall may comprise three, four, five or more spaced annular wall segments, such as six spaced annular wall segments. The annular wall segments may comprise a width, for example a circumferential width. The apertures, spaces or gaps between the annular wall segments may comprise a circumferential width. In some preferred examples, the aggregated circumferential width of the annular wall segments is less than the aggregated circumferential width of the apertures, spaces or gaps between them. In other words, the aggregated circumferential width of the apertures, spaces or gaps between the annular wall segments is less than the aggregated circumferential width of the annular wall segments. In other examples, the aggregated circumferential width of the annular wall segments is greater than the aggregated circumferential width of the apertures, spaces or gaps between them.

A first flow passage may be described between the filter and the housing cover. The first flow passage may comprise the bypass flow passage. A second flow passage may be described and/or circumscribed by the valve seat of the first end of the filter. A bypass inlet may be described and/or circumscribed by the valve seat of the first end of the filter. The first flow passage, e.g. the bypass flow passage, may comprise a minimum flow area that is greater than a minimum flow area of the second flow passage.

The biasing member may urge the housing cover away from the filter, for example such that the projections or flanges engage one another. The biasing member may urge the housing cover away from the filter to expose the aperture(s), space(s) or gap(s) in the interrupted annular connector or wall. The or a first flow passage may be described between the aperture(s), space(s) or gap(s) in the or each interrupted annular connector or wall. The first flow passage may be described by a rim of the continuous or substantially continuous annular connector or wall.

The filter may comprise an annular connector, which may be in, on, projecting from and/or integral with the first end. The filter may comprise the first annular connector. The housing cover may comprise an annular connector, which may be in, on, projecting from and/or integral with the inner surface. The housing cover may comprise the second annular connector.

The housing cover may comprise a fastening or coupling feature, e.g. for cooperating with a fastening or coupling feature of a housing to which it is to be secured and/or within which the filter is to be received. The housing cover, e.g. the fastening or coupling feature, may comprise a screw thread, e.g. for threadedly engaging a housing to which it is to be secured and/or within which the filter is to be received. Alternatively, the housing cover, e.g. the fastening or coupling feature, may comprise one or more engaging elements, snap fit tabs snap fit slots or holes for receiving threaded fasteners.

The housing cover may comprise a circumferential or peripheral wall, which may surround or circumscribe the locator and/or at least part of the filter. The circumferential or peripheral wall may comprise the fastening or coupling feature. The circumferential or pheripheral wall may comprise an external or internal thread. The circumferential or peripheral wall may comprise a flange, e.g. a radial flange. The flange of the circumferential or peripheral wall may extend outwardly therefrom. The flange of the circumferential or peripheral wall may comprise the fastening or coupling feature, may comprise one or more engaging elements, snap fit tabs snap fit slots or holes for receiving threaded fasteners

The housing cover may comprise a top or end wall, e.g. from which the circumferential or peripheral wall may depend. The top or end wall may comprise the locator and/or the locator may depend from the top or end wall. The housing cover may comprise a transition joining the circumferential or peripheral wall to the top or end wall. The transition may be filleted, frustoconical, curved, part-spherical or part-spheroidal. The transition may comprise or describe a truncated hemisphere or hemispheroid.

The biasing means (or biasing member) may comprise a spring, such as a coil or compression spring. Alternatively, the biasing member may comprise a solid or hollow block or cylinder. The biasing member may comprise a resilient material. When the biasing member comprises a spring, the material may comprise a metallic or plastics material. When the biasing member comprises a solid or hollow block or cylinder, the material preferably comprises an elastomeric material.

The filter may comprise a filter element. The filter element may be pleated or comprise a pleated filter element. The filter element may be hollow and/or comprise a tubular filter or tubular filter element. The filter element may be substantially cylindrical, e.g. in the form of a hollow cylinder. The filter element may comprise or be formed of a pleated sheet of filter medium or material, which may be connected at its ends to form the hollow or tubular filter element. The filter may comprise an end cap, e.g. a first end cap. The end cap may be secured to and/or bonded to the filter element.

The end cap or first end cap may comprise a bypass end cap. The end cap or first end cap may comprise the valve seat. The end cap or first end cap may comprise a spigot, e.g. a central spigot, which may extend into or be received within the filter element. The spigot may be hollow. The end of the spigot, which may be received within the filter element, may be open and/or may describe an outlet of the filter and/or an inlet of the valve assembly. The open end of the spigot may describe at least part of the second flow passage. The open end of the spigot, e.g. the outlet of the filter or a bypass inlet, may be surrounded or circumscribed by the valve seat. The biasing member may be at least partially received within the hollow spigot.

The filter may comprise a second end, which may be open. The filter may comprise a second end cap, which may be secured to and/or bonded to the filter element. The second end cap may comprise an inlet end cap. The second end cap may comprise a spigot, e.g. a central spigot, which may extend into or be received within the filter element. The end of the spigot, which may be received within the filter element, may be open and/or may describe an inlet of the filter.

The filter may comprise a bypass end cap which comprises a first hollow spigot, the valve member and the biasing means being inserted into the first hollow spigot.

The filter may comprise a inlet end cap which may comprise a second hollow spigot.

The filter element, e.g. an end portion thereof, may be embedded, e.g. partially embedded, within and/or fused to at least one or each end cap.

At least one or each end cap may comprise an interface region, e.g. within which the filter element is embedded, e.g. partially embedded. At least one or each end cap, e.g. the interface region thereof, may comprise a pad, which may be circular or annular. At least a portion of the material of the interface region or pad may surround or envelop an embedded part or portion of the filter element.

The filter assembly may comprise a primary fluid path, which may extend through the filter element or from its interior to outside the filter element. The filter assembly may comprise a secondary or bypass fluid path, which may extend from the inside of the filter element and out through the housing cover via the valve assembly. The secondary or bypass fluid path may provide a bypass around the filter element. A portion of the primary fluid path, e.g. the inside of the filter element, may comprise a portion of the secondary or bypass fluid path.

The valve assembly may be operable such that, in use, when closed, fluid may flow along the primary fluid path. The valve assembly may be operable such that, in use, and when opened, fluid may flow along the secondary fluid path, e.g. bypassing the filter element.

The filter assembly may comprise a hydraulic filter assembly, e.g. a lubricant filter assembly. The filter assembly may be a filter assembly of a vehicle, for example transmission, e.g. an automatic transmission. The filter assembly may be for filtering or removing contaminants from a hydraulic fluid, such as oil, e.g. engine oil, transmission oil or lubricating oil. The filter element may comprise a fine filter, e.g. for filtering contaminants which are as small as 7-15 microns. The filter element may comprise pores having a size, e.g. an average size, of less than 25 microns, preferably less than 20 microns. In examples, the filter element comprises pores having a size, e.g. an average size, of less than 18 microns, for example between 7 and 15 microns.

In some examples, the filter assembly may comprise a fuel filter assembly or an air filter assembly, or a filter assembly for any other form of fluid.

The assembly may comprise a filter housing, e.g. to which the housing cover may be secured and/or within which the filter may be received.

Another aspect of the invention provides a fluid circuit comprising the filter assembly described above. Another aspect of the invention provides a hydraulic circuit comprising the filter assembly described above. Another aspect of the invention provides a lubrication circuit comprising the filter assembly described above.

Another aspect of the invention provides a vehicle fluid circuit comprising a filter assembly as described above.

The vehicle fluid circuit may comprise a hydraulic or air circuit. The vehicle fluid circuit may comprise a lubrication circuit. The vehicle fluid circuit may comprise a fluid pump, e.g. a hydraulic or pneumatic pump, which may be upstream or downstream of the filter assembly and/or may draw fluid therethrough. In examples where the fluid pump is upstream of the filter assembly, the pump may force the fluid through the filter element, e.g. from the outside to the inside thereof. In examples where the fluid pump is downstream of the filter assembly, the pump may draw the fluid through the filter element, e.g. by creating a relative vacuum within the filter element.

Another aspect of the invention provides a vehicle comprising a filter assembly as described above, or a vehicle fluid circuit as described above.

Yet another aspect of the invention provides a method of assembling a filter assembly, e.g. a filter assembly as described above.

The method may comprise inserting a filter into a filter housing. The method may comprise securing a housing cover to the filter housing and/or over an end of the filter, e.g. such that an inner surface of the housing cover engages a biasing means and/or urges a valve member into sealing engagement with a valve seat of the first end of the filter.

The method may comprise locating the biasing means relative to the housing cover using a locating means. The method may comprise securing or connecting the housing cover to, e.g. directly to, the filter. Securing or connecting the housing cover to the filter may be carried out using a connector, e.g. a snap connector or an annular connector. Securing or connecting the housing cover to the filter may comprise urging a first annular connector into a second annular connector, e.g. such that opposed radial flanges of the annular connectors engage with one another.

Securing the housing cover may comprise engaging one or more cooperating fastening or coupling features of the housing cover and the filter housing. Securing the housing cover to the filter housing may comprise rotating the housing cover relative to the filter housing, e.g. such that the housing cover threadedly engages the filter housing. Alternatively, securing the housing cover may comprise inserting engaging one or more fasteners into one or more respective holes in the housing cover and threadedly engaging one or more respective holes in the filter housing. Alternatively, securing the housing cover may comprise engaging one or more snap fit tabs in one of the housing cover and filter housing into one or more snap fit slots in the other of the housing cover and filter housing.

The method may comprise mounting, e.g. sealingly mounting, an end cap to an open end of a filter element, e.g. a pleated filter element. The end cap may be mounted to the filter element such that an outlet of the end cap is in fluid communication with the open end. The method or mounting may comprise embedding part or a portion of the filter element within the end cap, e.g. within a portion of the end cap, such as a interface region or pad, which may be circular or annular.

The method or mounting may comprise heating the end cap or end cap portion, e.g. before embedding the or a filter element part or portion therein. The end cap or end cap portion may be heated using infrared, e.g. an infrared heater or infrared heating element. The end cap or end cap portion may be heated by hot mirror or hot plate. Other heating processes are also envisaged without departing from the scope of the invention.

For the avoidance of doubt, any of the features described herein apply equally to any aspect of the invention. For example, the hydraulic circuit may comprise any one or more features of the filter assembly relevant thereto. Similarly, the method may comprise any one or more features or steps relevant to one or more features of the filter assembly or the hydraulic circuit.

Another aspect of the invention provides a computer program element comprising and/or describing and/or defining a three-dimensional design for use with a simulation means or a three-dimensional additive or subtractive manufacturing means or device, e.g. a three-dimensional printer or CNC machine, the three-dimensional design comprising one or more components of the filter assembly described above.

A yet further aspect of the invention provides the computer program element embodied on a computer readable medium.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible.

For the avoidance of doubt, the terms "may", "and/or", "e.g.", "for example" and any similar term as used herein should be interpreted as non-limiting such that any feature so-described need not be present. Indeed, any combination of optional features is expressly envisaged without departing from the scope of the invention, whether or not these are expressly claimed. The applicant reserves the right to change any originally filed claim or file any new claim accordingly, including the right to amend any originally filed claim to depend from and/or incorporate any feature of any other claim although not originally claimed in that manner.

### Description of the drawings

Embodiments of the invention will now be described by way of example only with reference to the accompanying drawings in which:
Figure 1 is a section view through a filter assembly according to an embodiment of the invention;
Figure 2 is a partial perspective section view of the filter assembly of Figure 1 shown prior to assembly of the housing cover onto the filter; and
Figure 3 is a similar view to that of Figure 2, illustrating the filter assembly in the assembled condition.

### Detailed Description

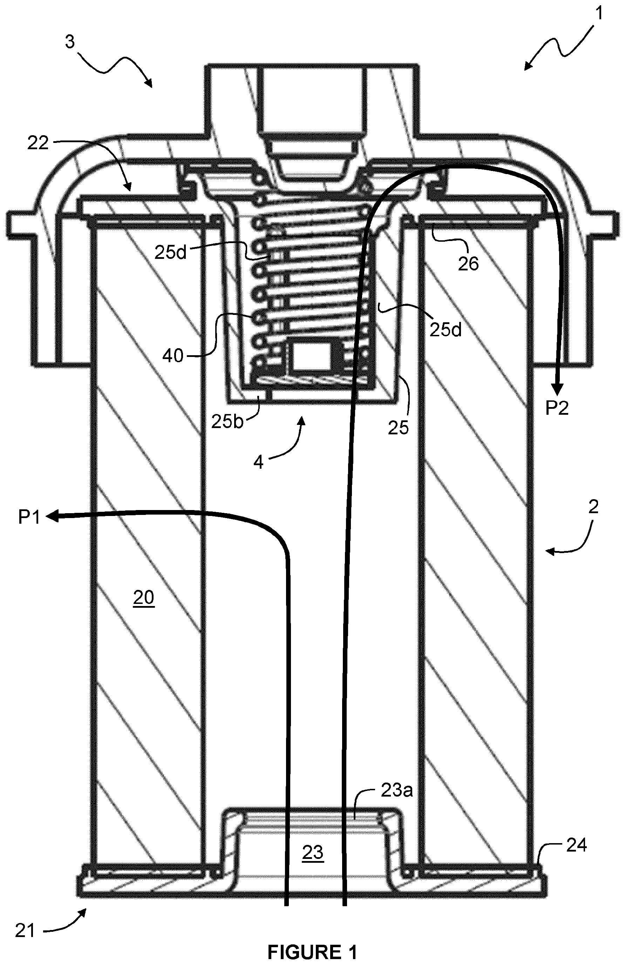

Referring now to Figure 1, there is shown a filter assembly 1 for use in a lubrication circuit for a vehicle (not shown), which includes a filter 2, a housing cover 3 and a valve assembly 4 captivated between the filter 2 and the housing cover 3.

The filter 2 includes a pleated filter element 20, a lower, inlet end cap 21 and an upper, bypass end cap 22. The inlet end cap 21 is circular in plan and includes a central spigot 23 projecting into the filter element 20, which is circumscribed by an annular pad 24. The spigot 23 is hollow and open at each of its ends with an opening 23a at the end received within the filter element 20, which corresponds to an inlet 23a of the filter 2.

The bypass end cap 22 is also circular in plan and includes a central spigot 25 projecting into the filter element 20, which is also circumscribed by an annular pad 26. The spigot 25 of the bypass end cap 22 is also hollow and open at each of its ends, with an opening 25a at the end received within the filter element 20, which corresponds to a bypass inlet 25a of the filter 20. The spigot 25 includes a radial lip 25b, which circumscribes the bypass inlet 25a and describes a valve seat 25c. The spigot 25 also includes a plurality of axial ribs 25d spaced about its internal surface.

In this example, the pleated filter element 20 is partially embedded within the annular pads 24, 26, thereby to secure the end caps 21, 22 to the filter element 20. This is achieved by heating the surface of the annular pads 24, 26 using infrared or a hot mirror, and pushing the pleated filter element 20 into the melted surface layer. However, it is also envisaged that the annular pads 24, 26 may be omitted, with the filter element 20 being secured to the end caps 24, 26 using hot melt. In other examples, mechanical fixings are used, for example wherein the filter element 20 bears against the annular pads 24, 26, which retain the filter element 20 in compression.

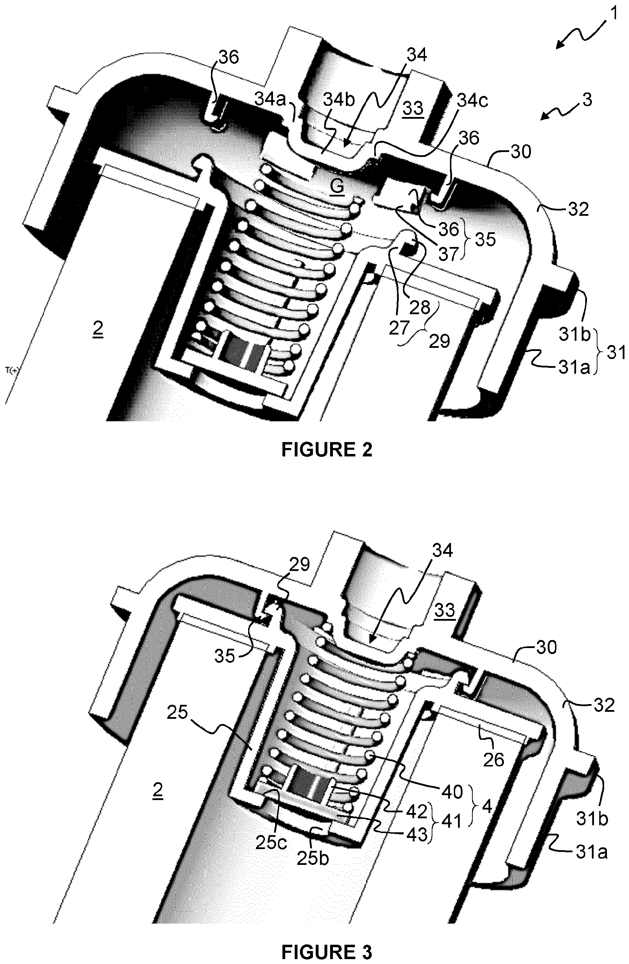

The bypass end cap 22 also includes a continuous annular wall 27 (shown more clearly in Figure 2) projecting from the opposite side to the spigot 25 and annular pad 26. The annular wall 27 includes a radial flange 28 projecting outwardly from its free end. The radial flange 28 is in the form of a barb, with a radial surface parallel to the circular body of the bypass end cap 22 and a lead-in opposite the radial surface. Together, the annular wall 27 and radial flange 28 describe an annular connector 29.

The housing cover 3 is substantially circular in plan and includes an end wall 30, a peripheral wall 31 depending from the end wall 30 and joined thereto by a transition portion 32. The housing cover 3 also includes an external locator 33 projecting from an outer surface of the end wall 30, an internal locator 34 depending from an inner surface of the end wall 30 and an annular connector 35 also depending from the inner surface of the end wall 30 and surrounding or circumscribing the internal locator 34.

The peripheral wall 31 has a threaded external surface 31a and a radial flange 31b between the threaded external surface 31a and the transition portion 32. The transition portion 32 is in the form of a part-spherical ring 32, which provides a gradual transition from the end wall 30 to the peripheral wall 31. The external locator 33 is in the form of a hollow cylinder, with a blind bore extending into the internal locator 34. The internal locator 34 is hollow and includes a cylindrical, root portion 34a projecting from the end wall 30 and an end portion 34b in the form of a truncated dome, which is joined to the root portion 34a by a step 34c.

The annular connector 35 includes an interrupted annular wall provided by a plurality of annular wall segments 36, six in this example, spaced from one another by a gap G. Each annular wall segment 36 includes a radial flange 37 projecting inwardly from its free end. The radial flange 37 is in the form of a barb, with a radial surface parallel to the end wall 30 and a lead-in opposite the radial surface. Together, the annular wall segments 36 and radial flanges 37 describe the annular connector 35.

The valve assembly 4 includes a biasing member 40, which is a coil spring 40 formed of stainless steel in this example, and a valve member 41. The valve member 41 includes a flat, circular disc 42, which engages the valve seat 25c on a first side, and an annular wall 43 projecting from side opposite the valve seat 25c.

In order to assemble the filter assembly, the valve member 41 is inserted into the central spigot 25 of the bypass end cap 22 and brought into abutment with the valve seat 25c. The biasing member 40 is then inserted into the central spigot 25, such that it engages the circular disc 42 of the valve member 41, and surrounds the annular wall 43. The axial ribs 25d ensure that the biasing member 40 is centralised within the spigot 25.

The housing cover 3 is then placed over the bypass end cap 22 and lowered thereon until the biasing member 40 receives the end portion 34b of the internal locator 34, and comes to rest against the step 34c. The housing cover 3 is then urged toward the bypass end cap 22, thereby compressing the biasing member 40, until the annular connector 29 of the bypass end cap 22 engages the annular connector 35 of the housing cover 3. Further axial force causes the lead-ins of each of the annular connectors 29, 35 to engage one another. This forces the free ends of the annular wall segments 36 of the housing cover annular connector 35 apart until the flanges 37 pass over those of the bypass end cap annular connector 29, at which point the annular wall segments 36 snap back into their original state.

Once the annular connectors 29, 35 are engaged, the biasing member 40 urges the housing cover 3 away from the bypass end cap 22 of the filter 2, thereby urging the flanges 28, 37 of the annular connectors 29, 35 toward one another and locking the housing cover 3 to the bypass end cap 22. As a result, the filter assembly 1 is a self-contained assembly, ready to be assembled to a filter housing (not shown) of the vehicle (not shown).

Specifically, the filter assembly 1 would be mounted to the filter housing (not shown) by inserting the filter 2 therein through a threaded opening (not show), and rotating the housing cover 3 to engage the threaded external surface 31a of the peripheral wall 31 with the threaded opening (not shown) of the filter housing (not shown).

The skilled person will appreciate that rotation of the housing cover 3 to secure it to the filter housing (not shown) may result in relative rotation between the housing cover 3 and the filter 2. The skilled person will also appreciate that the configuration of the annular connectors 29, 35 is such that this relative rotation can be accommodated without distorting the filter element 20.

In use, fluid flows from a port in the filter housing (not shown) into the inlet 23a of the filter 2. Under normal conditions, the fluid flows along a first fluid path P1 from the inlet 23a, along the inside and through the filter element 20 to the outside thereof. If the pressure exceeds a predetermined threshold, for example if the fluid is too cold, the valve member 41 unseats from the valve seat 25c, thereby opening the bypass inlet 25a.

When the bypass inlet 25a is open, a second fluid path P2 is described from the bypass inlet 25a, into the spigot 25 and through the openings described by the gaps G between the annular wall segments 36, the end wall 30 of the housing cover 3 and the upper edge of the annular connector 29 of the bypass end cap 22. The flow through the second fluid path P2 is then redirected by the inner surface of the transition portion 32 and out between the filter element 20 and the peripheral wall 31.

The skilled person will appreciate that the annular wall segments 36 and the gaps G therebetween may be sized and configured to inhibit any flow restrictions through the second fluid path P2. Their size and configuration must, however, balance the requirement for a sufficient aggregate flow area, with that of their structural rigidity, to ensure a reliable connection between the housing cover 3 and the end cap 22 of the filter 2.

It will be appreciated by those skilled in the art that several variations to the aforementioned embodiments are envisaged without departing from the scope of the invention. For example, the housing cover 3 need not include a peripheral wall 31 with a threaded external surface 31a. It may instead include mounting lugs with holes, for receiving threaded fasteners to secure the housing cover 3 to the filter housing (not shown). The filter 2 need not incorporate end caps 21, 22, at least not as illustrated.

It will also be appreciated by those skilled in the art that any number of combinations of the aforementioned features and/or those shown in the appended drawings provide clear advantages over the prior art and are therefore within the scope of the invention described herein.

## Claims

1. A filter assembly (1) for use in a vehicle, the filter assembly (1) comprising a filter (2) having a first end with a valve seat (25c), a housing cover (3) and a valve assembly (4) including a valve member (41) and biasing means, wherein the filter (2) is configured to be received, in use, within a filter housing with the housing cover (3) secured to the filter housing and over the first end of the filter such that an inner surface of the housing cover engages the biasing means and urges the valve member (41) into sealing engagement with the valve seat (25c) of the first end of the filter (2).

2. A filter assembly according to claim 1, wherein the housing cover (3) is connected to the filter (2) by a connector (29, 35) with the biasing means and valve member (41) captivated therebetween.

3. A filter according to any of the preceding claims, wherein the housing cover (3) comprising a locator (34) which locates and engages the biasing means.

4. A filter assembly according to claims 2 and 3, wherein the connector (29, 35) at least partially surrounds the locator (34) and includes one or more apertures describing a bypass flow passage.

5. A filter assembly according to claim 4, wherein the connector (29, 35) comprises a first annular connector, which includes an external radial flange and is received within a second annular connector that includes an internal radial flange, the biasing means urging the housing cover away from the filter (2) such that the flanges engage one another.

6. A filter assembly according to claim 5, wherein one of the annular connectors (29, 35) comprises an interrupted annular wall including a plurality of spaced annular wall segments and the apertures describing the bypass flow passage are described between the spaced annular wall segments.

7. A filter assembly according to any preceding claim, wherein the biasing means comprise a spring.

8. A filter assembly according to any of claims 1 to 6, wherein the biasing means comprise resilient material.

9. A filter assembly according to any preceding claim, wherein the filter (2) comprises a bypass end cap (22) which comprises a first hollow spigot (25), the valve member (41) and the biasing means being inserted into the first hollow spigot (25).

10. A filter assembly according to any preceding claim, wherein the filter (2) comprises a inlet end cap (21) which comprises a second hollow spigot (23).

11. A filter assembly according to any preceding claim, wherein the filter (2) comprises a tubular filter element.

12. Lubrication circuit comprising the filter assembly (1) of any of claims 1 to 11.
